Europäisches Patentamt

European Patent Office

Office européen des brevets

(19)

(11) Veröffentlichungsnummer : **0 318 994 B1**

## (12) EUROPÄISCHE PATENTSCHRIFT

(45) Veröffentlichungstag der Patentschrift :
09.10.91 Patentblatt 91/41

(51) Int. Cl.⁵ : **F16L 25/00**

(21) Anmeldenummer : **88120073.7**

(22) Anmeldetag : **01.12.88**

(54) Vorrichtung zur stirnseitigen Verbindung von Rohren bzw. Kanalstücken.

(30) Priorität : **01.12.87 IT 3077087 U**

(43) Veröffentlichungstag der Anmeldung :
**07.06.89 Patentblatt 89/23**

(45) Bekanntmachung des Hinweises auf die
Patenterteilung :
**09.10.91 Patentblatt 91/41**

(84) Benannte Vertragsstaaten :
**AT BE CH DE ES FR GB GR LI LU NL SE**

(56) Entgegenhaltungen :
**DE-A- 2 353 625**
**DE-A- 2 362 445**
**DE-A- 3 606 370**

(73) Patentinhaber : **PITRE srl**
**I-35010 Ronchi di Villafranca (IT)**

(72) Erfinder : **Luciano, Griggio**
**9 via Mantova**
**I-35030 Rubano (Padova) (IT)**

(74) Vertreter : **Kreutz, Karl Jürgen, Dipl.-Ing.**
**Patentanwalt Osterwaldstrasse 149**
**W-8000 München 40 (DE)**

## Beschreibung

Die Erfindung betrifft eine Rohrverbindung jeweils zweier im Querschnitt rechteckiger Kanalrohrstücke einer Heizluftleitung.

Die Rohrleitungen von Heizluftanlagen haben im allgemeinen rechteckigen oder quadratischen Querschnitt, sie müssen gut isolieren und leicht montierbar sein. Die Wände dieser Rohrleitungen oder Kanäle bestehen meist aus Isoliermaterial, sie sind selbsttragend oder in Verbundform mit Blechverkleidungen ausgeführt. Die Kanäle sind aus einzelnen Rohren bzw. Kanalstücken zusammengesetzt. Dabei kommt es darauf an, die einzelnen Rohrstücke schnell, sicher und einfach miteinander zu verbinden, wobei Wärmebrücken und Undichtigkeit vermieden werden müssen. Ferner sollen die Kanäle ein angenehmes Äußeres haben, da sie meist sichtbar im Innern von Gebäuden verlegt sind.

Der Erfindung liegt die Aufgabe zugrunde, eine Rohrverbindung zu schaffen, die sämtliche obige Anforderungen erfüllt.

Die Lösung dieser Aufgabe ist in dem Kennzeichnungsteil des Patentanspruchs 1 angegeben.

Gemäß der Erfindung sind also U-förmige Stoßprofile vorgesehen, jeweils entsprechend der Länge (innen) der einzelnen Rechteckseiten des Kanalquerschnitts. Die lichte Weite des U-Profils entspricht der Dicke der Kanalwände, so daß die U-Profile auf die Stirnenden aufgeschoben werden können.

Der Mittelsteg jedes U-förmigen Stoßprofils weist eine T-förmige Längsnut auf (es sind auch andere Querschnitte möglich).

Beim Verlegen werden die Kanalstücke gegeneinander ausgerichtet, so daß die Mittelstege des einen Stirnendes zur Anlage an die Mittelstege des anderen Stirnendes gelangen ; in die gegeneinander ausgerichteten T-Nuten wird je ein doppel-T-förmiges bzw. H-förmiges Verbindungsprofil von der Seite eingeschoben, womit die Verbindung hergestellt ist. Die Eckbereiche werden zweckmäßig mit entsprechenden Winkelelementen abgedeckt (Anspruch 2).

Wie ersichtlich, werden die eingangs erwähnten Anforderungen erfüllt.

Die Stoßprofile und Verbindungsprofile können aus unterschiedlichem Material sein, insbesondere aus Kunststoff oder Metall. Im wesentlichen gemäß der Erfindung können zwei Kanalstücke auch unter einem Winkel miteinander verbunden werden, um einen Kanal abgewinkelt oder längs Kurven zu verlegen. Hierzu ist es lediglich erforderlich, daß jeweils die beiden zueinander und zu der "Knicklinie" parallelen doppel-T-förmigen Verbindungsprofile einen entsprechenden Winkel aufweisen, d.h. ihre beiden T-Hälften schließen den gewünschten Winkel miteinander ein (Anspruch 3).

Die Heizluftkanäle können auch in beengten Räumen, insbesondere längs der Innenkante zwischen Wand und Decke eines Gebäuderaumes verlegt werden, da die H-förmigen Verbindungsprofile immer von der einen Seite bzw. von unten eingeschoben werden können.

Nachfolgend wird ein Ausführungsbeispiel anhand der Zeichnung beschrieben.

Fig. 1    zeigt das Ausführungsbeispiel in Perspektive, räumlich auseinandergezogen.
Fig. 2    zeigt einen Querschnitt nach Linie II-II in Fig. 1, vergrößert.

Die beiden rechteckigen Kanalstücke A werden erfindungsgemäß miteinander verbunden.
Hierzu sind gemäß der Erfindung vorgesehen :
vier U-förmige Stoßprofile B
vier H-förmige Verbindungsprofile C
vier Abdeckwinkelelemente D.

Die Kanalstücke sind aus selbsttragenden Platten aus isolierendem Material in der erforderlichen Wandstärke ausgebildet, gegebenenfalls in Verbindung mit Blechkanälen. Auf die Stirnenden wird je ein Stoßprofil B aufgeschoben, dessen Länge der lichten Weite des Kanals entspricht. Die lichte Weite zwischen den Seitenflanschen B1 entspricht der Kanal-Wandstärke an den Stirnenden.

Die Stoßprofile werden mit bekannten Mitteln an den Stirnenden der Kanalstücke befestigt (z.B. durch Kleben oder Schrauben, Löten, Schweissen).

Der entsprechend dickere Steg B2 jedes Stoßprofils B weist eine durchgehende T-förmige Nut B3 auf.

Die H-förmigen Verbindungsprofile entsprechen in ihrem Querschnitt dem lichten Querschnitt der Nuten B3.

Bei der Montage die Rohrstücke wie üblich gegeneinander stirnseitig ausgerichtet, wobei die Stoßprofile B bzw. deren Mittelstege B2 mit den T-Nuten B3 gegeneinander zur Anlage gelangen — nach dem Einschieben je eines H-förmigen Verbindungsprofils ist die Verbindung hergestellt. Die Länge der Verbindungsprofile C entspricht zweckmäßig den Außenabmessungen (Länge bzw. Breite) des Kanals, damit die Eckräume ausgefüllt sind (es kann für die Eckräume aber anderes Füllmaterial vorgesehen sein).

Die Ecken bzw. die Längskanten im Bereich der Verbindung werden sodann mit Winkelelementen D abgedeckt.

Wie ohne weiteres ersichtlich, nimmt die Verbindung nur sehr geringen Raum ein, die Verbindungsteile stehen weder nach außen noch nach innen über.

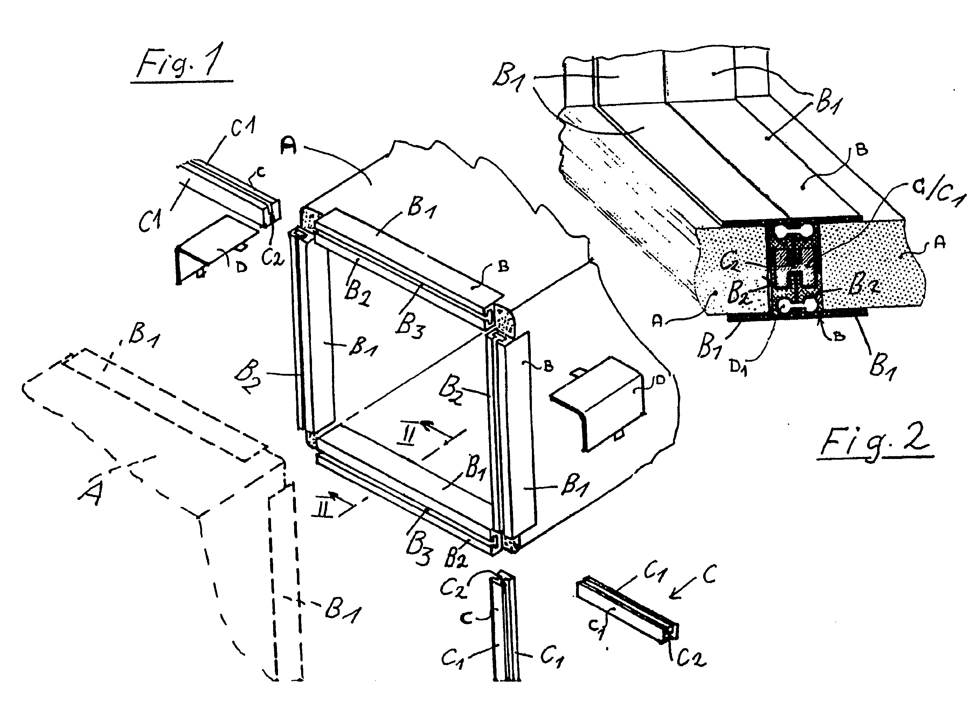

Gemäß Fig. 2 ist ferner beidseits des Verbindungsprofils C je eine Dichtung D1 in entsprechende Kanäle der Stoßprofile B eingesetzt, deren Querschnitt aus zwei Kreisen und einem Steg zwischen diesem besteht.

## Patentansprüche

1. Rohrverbindung jeweils zweier im Querschnitt rechteckiger Kanalrohrstücke (A) einer Heizluftleitung, dadurch gekennzeichnet, daß auf jede Rechteck-Seite der Stirnenden der Kanalstücke (A) je ein U-förmiges Stoßprofil (B) aufgeschoben ist, auf dessen Mittelsteg (B2) eine im wesentlichen T-förmige Nut (B3) vorgesehen ist, und daß in die zwei einander zugekehrten T-förmigen Nuten (B3) je zweier U-förmiger Stoßprofile (B) ein entsprechend doppel-T-förmiges Verbindungsprofil (C) eingeschoben ist.

2. Rohrverbindung nach Anspruch 1, dadurch gekennzeichnet, daß Winkelelemente (D) zum Abdecken der Eckbereiche vorgesehen sind.

3. Rohrverbindung nach Anspruch 1, dadurch gekennzeichnet, daß zur abgewinkelten Verlegung der Heizluftleitung je zwei Verbindungsprofile (C) vorgesehen sind, die um ihre Längsmittellinie entsprechend abgewinkelt sind, so daß ihre beiden T-Hälften den Winkel zwischen sich anschließen.

## Claims

1. A device for end-to-end connection between two pipes or channelling components (A) with square cross-section which make up part of a hot air duct system, featuring the fact that a U-shaped junction bar (B) can be inserted onto the front ends (i.e. on each square side of the front ends) of such channelling components (A), in which the bar's intermediate bead (B2) foresees the presence of a T-shaped slot (B3), and also featuring the fact that within the two T-shaped slots (B3) which cross and close onto one another respectively with two U-shaped junction bars (B), a double-T-shaped or H-shaped junction bar (C) is thereby inserted.

2. A device corresponding to the description of point 1), featuring the fact that angular elements (D) for covering the corner zones are foreseen.

3. A device corresponding to the description of point 1), featuring the fact that, for installation of hot air ducts even at right-angles, two connecting bars (C) which are bent at an angle in direct correspondence with the longitudinal central axis are foreseen, so that the two T-shaped half-sections cover the angle formed between the same two half-sections.

## Revendications

1. Dispositif pour le branchement frontal de deux tubes ou composants de canalisation (A) ayant la section carrée et faisant partie de conduites d'air chaud, cela est marqué par le fait que sur les extrémités frontales (c'est à dire sur chaque côté carré des extrémités frontales) de ces composants de canalisation (A) peut être inserrée une face de jonction en U (B), sur la nervure intermédiaire de laquelle (B2) une rainure en forme de "T" (B3) est prévue, c'est de plus marqué par le fait que dans les deux rainures en forme de "T" (B3) qui se croisent et se ferment l'une avec l'autre par deux faces de jonctions en "U" correspondantes (B) est inserrée une face de branchement double en forme de "T" ou de "H" (C).

2. Dispositif comme décrit ci-dessus au point 1. se distinguant par le fait que, des éléments angulaires (D) sont prévus pour couvrir les zones des arètes.

3. Dispositif comme décrit ci-dessus au point 1. se distinguant par le fait que, pour l'installation même angulaire des conduites à air chaud deux faces de branchement (C) sont prévues. Elles sont pliées en correspondance directe de leur ligne longitudinale centrale de façon que leurs deux moitiés en forme de "T" vont couvrir et fermer l'angle qui se forme entre les deux moitiés elles-mêmes.

Fig.1

Fig.2

EP 0 318 994 B1